# EUROPEAN PATENT APPLICATION

(11) **EP 4 571 859 A1**
(43) Date of publication of application: **18.06.2025**
(21) Application number: 23215731.3
(22) Date of filing: 12.12.2023
(51) Int. Cl.: H01M 4/04, H01M 4/139

(54) **METHOD AND SYSTEM FOR SPECIFYING A TARGET SLURRY FOR A TARGET BATTERY CELL**

(71) Applicant: CUSTOMCELLS Holding GmbH, 25524 Itzehoe (DE)
(72) Inventor: Stuber, Kai, Itzehoe (DE)
(74) Representative: LKGLOBAL Lorenz & Kopf Patentanwalt Attorney at Law PartG mbB

(57) **Abstract**

The invention relates to a method of specifying a target slurry for a target battery cell, comprising: providing, for at least one reference slurry, a set of reference production parameters,
providing predefined target requirements defining at least one target slurry property of the target slurry,
inputting the set of reference production parameters and the target requirements into a model, wherein in response the model:
estimates a matching score of the reference slurry with respect to the target slurry, and/or
identifies at least one target production parameter from the set of reference production parameters which is estimated to be relevant to achieve the target requirements.

## Description

### FIELD OF THE DISCLOSURE

The present invention relates to methods and systems for specifying a target slurry for a target battery cell. In particular, the method may be a computer-implemented method using a machine-learning model.

### BACKGROUND OF THE DISCLOSURE

Developers of slurries for battery cells usually possess extensive knowledge regarding the specification of slurries for battery cells. Battery cells (e.g. a specific design or those from different series) may namely be customized to satisfy specific requirements, e.g. general economic or technical requirements, or requirements which originate from a customer). Such a customized battery cell usually requires a customized slurry. Such a customized slurry may also be referred to as a target slurry in the following. The developer knowledge may mainly be based on past developments and other slurries for battery cells. Such other slurries for battery cells may also be referred to as reference slurries in the following.

In the following, the terms "battery cell" and "cell" may be used interchangeably. The term "slurry for battery cells" and "slurry" may be used interchangeably. The term "specifying" may be used interchangeably with "designing" or "optimizing".

However, due to the large number of reference slurries and in particular in view of the complex characteristics, it is difficult for a human (even for specialists) to know the complete state of technology and hence to judge, which reference slurries might provide a useful guidance to specify a (new) target slurry.

Different approaches to use artificial intelligence to process battery cell and slurry data are known, cf. e.g.:
Teo Lombardo, Marc Duquesnoy, Hassna El-Bouysidy, Fabian Årén, Alfonso Gallo-Bueno, Peter Bjørn Jorgensen, Arghya Bhowmik, Arnaud Demortière, Elixabete Ayerbe, Francisco Alcaide, Marine Reynaud, Javier Carrasco, Alexis Grimaud, Chao Zhang, Tejs Vegge, Patrik Johansson, and Alejandro A. Franco: Artificial Intelligence Applied to Battery Research: Hype or Reality? Chemical Reviews 2022 122 (12), 10899-10969 DOI: 10.1021/acs.chemrev.1c00108.

The article addresses concepts, approaches, tools, outcomes, and challenges of using AI/ML as an accelerator for the design and optimization of the next generation of batteries. According to the article, battery R&D is a complex multivariable problem, where very different properties, such as performance, life-cycle analyses, safety, cost, environmental effects, and resource issues, are contained. Furthermore, the overall battery circular economy should eventually be included from the mining, production, and assembly stage via the long usage phase to the final reuse and recycling processes. The present research workflow, however, relies heavily on a forward trial- and-error approach and is largely materials centred: synthesizing materials, manufacturing electrolytes and electrodes, assembling cells, and finally assessing performance. Even considering only these aspects, there are >10100 possibilities to synthesize active materials and prepare electrolytes, almost an infinite number of possibilities for choosing the electrode manufacturing parameters and dozens of possible cell formats, which is far greater than what a human brain can handle. This makes the emergence of inverse design tools difficult which could enable the prediction of the battery component properties needed for a given performance target and cell format.

Furthermore, according to the article, the amount of battery R&D data grows exponentially, following the world data-sphere trend. For example, BASF, the second largest chemical producer in the world, recently announced that they produce >70 million battery characterization data points per day, and in an academic context, as an example, the French Network on Electrochemical Energy Storage (RS2E) with its 17 academic partners generates ca. 1 petabyte of battery data per year.

### SUMMARY OF THE DISCLOSURE

Currently, it remains desirable to overcome the aforementioned problems and in particular to provide a computer-implemented method and system for specifying a target slurry for a target battery cell which allows an easy and straightforward interpretation of the output. At the same time, it is desirable that the output provides a certain degree of freedom to a human developer when specifying the complete target slurry design and/or producing the target slurry.

Therefore, the present disclosure relates to a computer-implemented method of specifying a target slurry for a target battery cell, comprising:
providing, for at least one reference slurry, a set of reference production parameters,
providing predefined target requirements defining at least one target slurry property of the target slurry,
inputting the set of reference production parameters and the target requirements into a model, wherein in response the model:
estimates a matching score of the reference slurry with respect to the target slurry, and/or
identifies at least one target production parameter from the set of reference production parameters which is estimated to be relevant to achieve the target requirements.

Accordingly, the at least one target production parameter from the set of reference production parameters may be identified which is estimated to be relevant to achieve (and/or acquire) the at least one target slurry property.

A slurry property may be generally understood as a characteristic of the slurry as produced, i.e. the final product as provided to and/or used by an end user. In comparison, the production parameters may characterize any data used and/or generated during the production, i.e. any information which may be necessary to produce the slurry and/or which may be generated in the production process.

By providing such a method it becomes possible to retrieve, based on the matching score(s), one or several reference slurries, which may serve as valuable guidance to specify the target slurry. For example, a reference slurry may have a relatively high matching score and hence serve as a positive example / positive guidance of how to specify the target slurry. At the same time, a reference slurry having a relatively low matching score, may serve as a negative example or may serve to define an exclusion criterium with regard to its production parameters.

In addition, or as an alternative, instead of determining a complete slurry design / specification the method may only identify one single or a limited selection of target production parameter(s) which are estimated to be essential / important for the target slurry. Hence, the method provides a degree of freedom to the human developer, as the further production parameters may still be manually chosen and/or adjusted. Alternatively, said further production parameters may be specified by the same model or another model or algorithm as a function of the target production parameter(s).

As a consequence, since not all but only one or a limited selection of target production parameter(s) is identified, the estimation of the model may be both more reliable (since only the clear and confident results may be used as output) and easier to be interpreted by a human developer. Moreover, the computational cost and / or complexity of the method may be reduced.

A reference slurry may be part of an operational reference battery cell. In this way, the properties of the operational reference cell can be used to identify corresponding properties of the reference slurry. Particularly, in this way, meaningful insights in the actual behaviour of the reference slurry in a reference battery cell, particularly during operation of the reference battery cell, can be obtained. A reference slurry does not need to be a fully produced slurry. It may for example also be a part of a slurry, particularly a part of a slurry containing only parts of its final material composition.

The target requirements may be defined e.g. based on customer requirements and/or a general economic and/or technical objective.

A target production parameter may be understood as a predefined variable characterizing the slurry or its production process. At least one value may be assigned to a parameter, e.g. a number / range (e.g. of a quantity or size, or process time) or a material / material class. Also, several values (i.e. several suggestions / recommendations, derived e.g. from different highly matching reference slurries) may be assigned. The value may also constitute an exclusion criterium, e.g. a specific material which should not be used to produce the target slurry.

As a consequence, in response the model may further determine a value of at least one target production parameter.

However, in the present disclosure it is also possible that the method only identifies at least one target production parameter which is estimated to be relevant to achieve the target requirements, without determining a (possible) value of it. For example, the method may identify that the material chosen for a specific part of the slurry is crucial without limiting the method to a particular material. A human developer or an algorithm (e.g. the model of the present disclosure or another model/algorithm) may then determine promising candidate values for said target production parameter. Said determination may e.g. be based on the determined matching score(s), or more in particular on the production parameters of one or several reference slurries selected based on the (e.g. relatively high or low) matching scores.

The reference production parameters desirably comprise or are assigned with respective values.

A battery cell, particularly a battery cell in which slurry was used during its production, according to the present disclosure may be understood as basic unit of a battery pack. One or several battery cells (e.g. connected in series) may be comprised by a packaging to form a battery module. One or several battery modules (e.g. connected in parallel) may be assembled (e.g. together with a battery management system) to form a battery pack. It is noted that the methods and system of the present disclosure may also be applied to a battery module or a battery pack, e.g. to a method of specifying a target battery pack.

The step of identifying at least one target production parameter may comprise:
identifying in addition at least one non-target production parameter from the set of reference production parameters which is estimated to be non-relevant to achieve the target requirements.

Accordingly, the method may additionally identify at least one production parameter which is non-relevant. A non-relevant production parameter may be understood as a production parameter which does not or insignificantly influence the slurry properties, in particular those defined by the target requirements, in case its parameter value changes. In contrast, a relevant production parameter may be understood as a production parameter which does influence the slurry properties, in particular those defined by the target requirements, in case its parameter value changes.

Hence, the one or more target production parameters may constitute a selection of the set of reference production parameters (but not all of them). As explained above, the non-target production parameter(s), and in particular their values, may be determined and/or adjusted by the human developer or an additional algorithm or model.

Identifying at least one target production parameter may also comprise:
estimating a relevance score for the target production parameter or for each reference production parameter, and
identifying the at least one target production parameter as a function of the relevance score or relevance scores

A relevance score may indicate the relevance of the respective (target) production parameter to achieve the target requirements.

It is also possible that for each reference production parameter a relevance score is estimated.

The at least one reference slurry may comprise a plurality of reference slurries.

The model may in this case select at least one reference slurry as a function of its matching score (e.g. by comparison of the scores with each other or with a predefined threshold). The selected slurry may e.g. be particularly relevant (serving as a positive example or guidance) or particularly non-relevant (serving as a negative example or exclusion sample).

For example, the plurality of reference slurries may contain all previously produced slurries, e.g. the complete possessed dataset or knowledge to which the human developer has access to. Even though there may be many reference slurries which a human developer would prima-facie exclude from being relevant for specifying the target slurry, the method may help to discover meaningful insights into the complete dataset, e.g. with regard to unexpectedly relevant or non-relevant production parameters.

However, it is possible that the complete set of reference slurries is filtered in a preceding step to a specific technical domain which corresponds to the target requirements.

The at least one target production parameter (and optionally also its value) may be identified from the at least one selected reference slurry. In other words, the selected reference slurry may be used as a basis to identify a particular production parameter.

The method may further comprise determining a set of further production parameters for the target slurry or a test slurry as a function of the at least one identified target production parameter. Accordingly, said further production parameters may be any other reference production parameters or all remaining reference production parameters, i.e. other than the target production parameter(s). The further production parameters (and/or their values) may be determined to be in accordance with value(s) of the target production parameter(s). The determination may be made either by the model of the present disclosure or any other algorithm or model, or manually.

The method may further comprise:
producing a test slurry using the at least one identified target production parameter and the further production parameters,
obtaining at least one slurry property of the test slurry,
comparing the obtained slurry property of the test slurry with the target requirements.

Hence, the test slurry may be understood to be a prototype of the target slurry, which may be produced based on the at least one identified target production parameter and optionally the further production parameters.

The test slurry may be used to evaluate whether the production parameters have been suitably chosen to match the target requirements.

Additionally, or alternatively the method may further comprise:
producing a test slurry using the at least one identified target production parameter and the further production parameters,
obtaining at least one slurry property of the test slurry,
comparing the obtained slurry property of the test slurry with a reference slurry property of a reference slurry, which has been selected by the model (for example due to its relatively high matching score).

Accordingly, this comparison may be used to control the quality of the dataset, i.e. of whether the slurry properties of the test slurry are also in fact close to those of the selected reference slurry or not.

The method may further comprise at least one of the following steps:
estimating a matching score of the test slurry with respect to the target slurry as a function of the comparison,
adjusting the relevance score of the at least one target production parameter and/or
the non-target production parameter as a function of the comparison,
correct at least one non-target production parameter to be a further target production parameter.

Accordingly, the measurements obtained from the comparison may be looped back to the method, in order to further adjust and/or finetune the model. The test slurry may be part of an operational test battery cell. In this way, the properties of the operational test battery cell can be used to identify corresponding properties of the test slurry. Particularly, in this way, meaningful insights in the actual behaviour of the test slurry in a test battery cell, particularly during operation of the test battery cell, can be obtained.

The reference and/or target production parameters may comprise at least one of:
slurry preparation parameters, such as at least one of:
   slurry composition parameters defining properties of the materials used to produce the slurry,
   throughput parameters of liquid dosing and solid dosing of the slurry,
   configuration parameters of a mixing device configured to mix and/or knead the materials of the slurry, and
slurry coating parameters, such as at least one of:
   configuration parameters of a pump configured to supply the slurry,
   configuration parameters of a coating system,
   a speed and/or tension of a substrate on which is coated with the slurry, configuration parameters of a drying system.

The slurry composition parameters may comprise information about the proportion of materials of the slurry, particularly it may comprise a proportion of active material and/or a proportion of additives and/or a proportion of binder materials and/or a proportion of solvent materials and/or a proportion of other slurry components. The proportion of the materials of the slurry may be a weight based proportion or a volume based proportion. The configuration parameters of the mixing device may comprise information about a mixing element configuration, particularly a mixing screw configuration, of the mixing device. The mixing screw may be arranged in a vertical or a horizontal position. A mixing screw arranged in a horizontal position has the advantage, that slurry materials can be added at different positions along a mixing section of the mixing screw. For example, active materials, binders and solvents may be added at a beginning of the mixing section and additives may be added at a position of the mixing section closer to the output of the mixing device. In this way, a slurry with a better homogeneity can be achieved. The slurry coating parameters may further comprise information about properties of the prepared slurry, in other words the mixed slurry which is ready for a subsequent coating process step. Particularly, the properties of the prepared slurry may comprise a viscosity and/or a density and/or a solid content proportion of the prepared slurry. The configuration parameters of the coating system may comprise information about the coating type, e.g. slot die coating or doctor blade coating. Further it may comprise processing information such as a distance of a coating nozzle to the applied coating film. The configuration parameters of the drying system may comprise information about the drying temperatures, particularly the drying temperature profiles along the drying section of the drying system, the type of drying system, e.g. an infrared drying system or a convection based drying system, the amount and conditioning, particularly the relative humidity, of fresh air supply and the like.

Accordingly, the production parameters may specify the production process of a slurry. In other words, they may be understood as an instruction manual as of how to mix, apply and dry the slurry.

In some cases, the production parameters may also comprise operating data of a battery cell comprising a slurry, particularly electrodes manufactured with the slurry, e.g. the number of cycles a battery has already been charged in its lifetime, etc.

In general, data used by the methods of the present disclosure (e.g. production parameters and/or slurry properties) may be generated, obtained, or measured in the various production stages of a slurry production process. Additionally, data used by the methods of the present disclosure may be generated, obtained, or measured in the various production stages of a battery cell production process. The battery cell production stages in particular include mechanical production, formation, and end-of-line (EOL) testing.

The reference and/or target slurry properties may comprise at least one of: properties of the prepared slurry, such as at least one of:
rheological properties of the prepared slurry
a particle size distribution of the prepared slurry, and
properties of the coated slurry, such as at least one of:
a basis weight of the coated slurry,
geometric or dimensional properties of the coated slurry,
a surface temperature of the coated slurry,
a defect pattern of the coated slurry,
an adhesion force of the coated slurry,
an electrode resistance of an electrode comprising the coated slurry,
an electrochemical property of the coated slurry,
an ionic and/or electrical conductivity.

The rheological properties of the prepared slurry may comprise for example a viscosity and/or a thixotropy and/or a storage and loss modulus, also referred to as dynamic modulus, at a particular shear rate, preferably at multiple particular shear rates, of the prepared slurry.

The particle size distribution of the prepared slurry may comprise for example the particle size distribution of the overall prepared slurry and/or of specific components of the prepared slurry such as active materials and/or carbon black and/or carrier materials.

The coated slurry is to be understood as the slurry coated on an electrode foil. The coated slurry may be a wet coated slurry or a dry coated slurry. The basis weight of the coated slurry may be a weight of the wet coated slurry or of the dry coated slurry.

The geometric or dimensional properties of the coated slurry may comprise for example dimensions such as length, width, offset (e.g. distance between two adjacent and pattern of the coated slurry, i.e. the portion of a substrate which has been coated with the slurry. The offset may define e.g. the width of an uncoated portion of the substrate, e.g. an uncoated edge portion of the substrate). The electrode resistance of an electrode comprising the coated slurry may comprise an interfacial resistance and/or a volume resistance and/or the combination thereof.

The electrochemical property of the coated slurry may comprise electrochemical data of an operational battery cell and/or battery module and/or battery pack, in which the coated slurry is used. Such electrochemical data of an operational battery may comprise a C-rate capability during charging and discharging, a capacitance, a cycle stability and an overall life time.

An electrochemical data of an operational battery may also be referred to as field data. Accordingly, the method of the present disclosure may not only take into account data obtained during the production of a slurry, but also such originating from operation of a battery cell and/or a battery module and/or a battery pack in which the coated slurry is used. In this way, knowledge about the reference slurries, in particular the respective slurry properties, are enriched and become more meaningful for evaluating the single reference slurries.

Accordingly, the slurry properties may characterize properties of the produced slurry. In other words, the slurry properties may be understood as describing the capabilities of the slurry.

The model may comprise at least one machine-learning model, optionally a pre-trained and/or fine-tuned machine-learning model. The machine-learning model may for example be a conventional machine-learning model or a deep-learning model, i.e. a (multi-layer) neural network.

The present disclosure further relates to a computer-implemented method of providing a dataset for training a model to specify a target slurry, comprising:
providing predefined target requirements defining at least one target slurry property of the target slurry,
providing a subset of reference slurries which have been selected based on the target requirements,
providing for each reference slurry of the subset:
   a set of reference production parameters, and at least one of:
   a matching score determined as a function of a comparison between the target slurry and the reference slurry, and
   at least one target production parameter selected from the set of reference production parameters (and desirably its value) which is estimated to be relevant to achieve the target requirements.

Such a dataset may in particular be useful to train or finetune a model to specify or design an optimized target slurry. For example, the dataset may allow the model to identify better matching reference slurries and/or more relevant production parameters (and optionally their values).

The method may further comprise providing for each reference slurry of the subset at least one reference slurry property, wherein the matching score is determined as a function of a comparison between the target slurry properties of the target slurry and the at least one reference slurry property of the reference slurry.

The present disclosure further relates to a computer-implemented method of training a model to specify a target slurry, comprising:
providing a dataset according to the method of the preceding claim,
training or finetuning the model by means of a supervised training process, wherein, for each reference slurry of the subset, the set of reference production parameters is used as input and the matching score and/or target production parameter are used to supervise the training process.

The model may also be continuously optimized by finetuning it in several iterations on different target slurries.

It is furthermore possible to pre-train a model for a specific technical domain (e.g. automobile battery cells and their slurries) using reference slurries of said domain.

Said pre-trained model may then be finetuned on a particular target slurry related to said domain, e.g. using the training method described above.

It is also possible to provide in this manner pre-trained models for different technical domains, respectively.

The present disclosure further relates to a computer program comprising computer-readable instructions which when executed by a data processing system cause the data processing system to carry out the method according to any one of preceding method claims.

The present disclosure further relates to a system for specifying a target slurry for a target battery cell, wherein the system comprises a processing unit configured to process a model and to:
receive, for at least one reference slurry, a set of reference production parameters and at least one reference slurry property,
receive predefined target requirements defining at least one target slurry property of the target slurry,
input the set of reference production parameters and the target requirements into a model, wherein in response the model:
   estimates a matching score of the reference slurry with respect to the target slurry, and/or
   identifies at least one target production parameter from the set of reference production parameters which is estimated to be relevant to achieve the target requirements.

The system may comprise further functional characteristics and/or may be configured in correspondence to the method operations described above.

It is intended that combinations of the above-described elements and those within the specification may be made, except where otherwise contradictory.

It is to be understood that both the foregoing general description and the following detailed description are exemplary and explanatory only, are provided for illustration purposes and are not restrictive of the disclosure, as claimed.

The accompanying drawings, which are incorporated in and constitute a part of this specification, are provided for illustration purposes, and illustrate embodiments of the disclosure and together with the description and serve to support and illustrate the principles thereof.

### BRIEF DESCRIPTION OF THE DRAWINGS

Fig. 1 shows an exemplary embodiment of a system according to embodiments of the present disclosure;
Fig. 2 shows an exemplary embodiment of a method of specifying a target slurry according to embodiments of the present disclosure;
Fig. 3 shows an exemplary embodiment of a method of producing a test slurry for evaluating the specification of the target slurry according to embodiments of the present disclosure; and
Fig. 4 shows an exemplary embodiment of a method of preparing a dataset and training/finetuning a model according to embodiments of the present disclosure.

### DESCRIPTION OF THE EMBODIMENTS

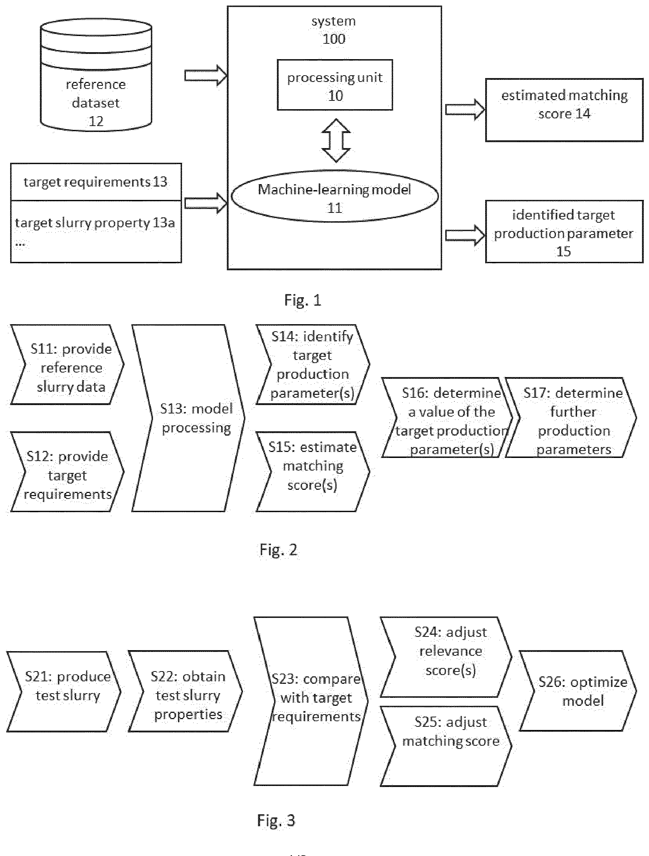

Reference will now be made to exemplary embodiments of the disclosure, examples of which are illustrated in the accompanying drawings. Wherever possible, the same reference numbers will be used throughout the drawings to refer to the same or like parts. Moreover, the features explained in context of a specific embodiment, for example that one of Fig. 1, also apply to any one of the other embodiments, when appropriate, unless differently described.

Fig. 1 shows an exemplary embodiment of a system 100 according to embodiments of the present disclosure.

The system 100 comprises a processing unit 10 which may comprise e.g. at least one of a general purpose processor (e.g. a central processing unit CPU), and/or at least one of a graphic processing unit (GPU), ASIC, FPGA, or any other type of processing unit. The processing unit may further comprise or be connected to a data storage (not shown) which may be included by the system or be external thereto (e.g. provided by a cloud service). The system may further include a memory. In some examples, the processing unit and the memory may be incorporated into the system or may be a computer or computer communicatively linked thereto. Depending on the exact configuration and type of computing device, memory (storing, instructions to perform the methods described herein) may be volatile (such as RAM), non-volatile (such as RAM, flash memory, etc.), or some combination of the two. Similarly, the system 100 may also have input device(s) such as keyboard, mouse, pen, voice input, etc. and/or output device(s) such as a display, in order to inform a user about the general state of the system and/or any operations, in particular about the output of the model, etc. Also included in the environment may be one or more communication connections, such as LAN, WAN, point to point, etc. In embodiments, the connections may be operable to facilitate point-to-point communications, connection-oriented communications, connectionless communications, etc.

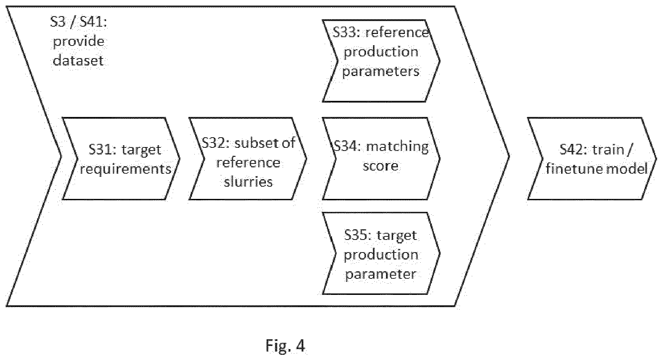

The processing unit 10 may further control or carry out a (computer-implemented) model 11. The model 11 may in particular be a machine-learning model 11. The model 11 may for example be or comprise one or several conventional machine-learning models, e.g. a random forest or K-nearest neighbor algorithm, and/or a deep-learning model, e.g. an artificial neural network. The model 11 may for example be stored in the above-mentioned data storage. The model 11 may be optimized, trained (from scratch) and/or fine-tuned, as e.g. described in context of Fig. 3 or 4. Instead of using a model, also a conventional computer algorithm might be used.

In one example, the model 11 may comprise a feature importance mechanism configured to select important features, i.e. to identify target production parameter(s), as also described below in context of fig. 2.

The model may be for example an end-to-end tree boosting system, for example XGBoost, as described in Chen, Tianqi; Guestrin, Carlos (2016). "XGBoost: A Scalable Tree Boosting System". In Krishnapuram, Balaji; Shah, Mohak; Smola, Alexander J.; Aggarwal, Charu C.; Shen, Dou; Rastogi, Rajeev (eds.). Proceedings of the 22nd ACM SIGKDD International Conference on Knowledge Discovery and Data Mining, San Francisco, CA, USA, August 13-17, 2016. ACM. pp. 785-794. arXiv: 1603.02754. Using a tree boosting system in the model may have the advantage that the model is scalable to the task and that a higher accuracy may be achieved compared to single decision trees. Moreover, the tree boosting system, in particular XGBoost, may be an accurate and efficiently trainable feature importance mechanism, which can hence accurately select features, i.e. identify target production parameter(s). The system may further have access to or receive input from a reference dataset 12. Said reference dataset 12 contains for each one of one or for a plurality of reference slurries a set of reference production parameters and at least one reference slurry property. The dataset 12 may in particular comprise data of all available reference slurries, or alternatively of a subset which has been filtered according to the technical domain of a target slurry. The dataset 12 may also be stored in the above-mentioned data storage.

The system may further have access to or receive input from a set of target requirements 13. Said target requirements 13 generally define a target slurry. Accordingly, they may contain one or several target slurry properties 13a of said target slurry.

Said target slurry properties 13a and reference slurry properties may comprise at least partially the same types of properties. For example, they may both comprise at least one of the following: properties of the prepared slurry, such as at least one of:
rheological properties of the prepared slurry, a particle size distribution of the prepared slurry, and properties of the coated slurry, such as at least one of: a basis weight of the coated slurry, geometric or dimensional properties of the coated slurry, a surface temperature of the coated slurry, a defect pattern of the coated slurry, an adhesion force of the coated slurry, an electrode resistance of an electrode comprising the coated slurry, an electrochemical property of the coated slurry, an ionic and/or electrical conductivity. In this way a direct comparison becomes possible.

The reference dataset 12 and target requirements 13 can be input into the model 11.

In response the model 11 may output an estimated matching score 14 for each reference slurry comprised by the reference dataset 12. Said matching score 14 may for example have a value between 0 and 1, e.g. 0.78. For example, the matching score 14 may be determined as a function of a comparison between the target slurry properties and the reference slurry property or properties of the respective reference slurry.

In addition or as alternative to outputting an estimated matching score 14, the model 11 may output at least one identified target production parameter 15. In particular, the model 11 may output a relevance score for each production parameter 15. The relevance score may express the relevance of a production parameter for the target slurry, i.e. whether it is an important parameter to achieve the target requirements or not. A target production parameter 15 may have a relatively high relevance parameter, e.g. exceeding a predefined relevance threshold. Correspondingly, a production parameter with a relatively low relevance parameter, e.g. below a predefined relevance threshold, may be considered as a non-target production parameter.

The model may further output one or several values for each target production parameter 15. For example, said values may be derived from respective reference production parameters of reference slurries having an increased matching score 14 (e.g. which exceeds a predefined matching threshold).

Fig. 2 shows an exemplary embodiment of a method of specifying a target slurry according to embodiments of the present disclosure.

In step S11 reference slurry data, in particular a set of reference production parameters and at least one reference slurry property, for least one reference slurry is provided and input to a model.

In step S12 one or several target requirements defining at least one target slurry property of the target slurry are provided and input to the same model.

In step S13 the model processes the inputs to calculate its output(s) according to step S14 and/or S15.

Accordingly, in step S14 the model identifies as a first possible output at least one target production parameter from the set of reference production parameters which is estimated to be relevant to achieve the target requirements. The at least one target production parameter may be determined by the model using a feature importance mechanism (as also described above). Each production parameter may be considered as a feature of a slurry. Based on the feature importance mechanism, the model may estimate the most important features, i.e. the target production parameter(s).

In step S15 the model estimates as a first possible output a matching score of the reference slurry with respect to the target slurry.

In an optional step S16 a value of the target production parameter is calculated.

Note that the value may be further output by the model. It may also be the only output, meanwhile the identified target production parameter and in particular the estimated matching score may merely be internal determinations of the model (also implicit determinations, e.g. represented by any kind of model embeddings). The value may be determined as a function of the identified target production parameter and the estimated matching score by the model of step S13, or another model or algorithm.

In an optional step S17 a set of further production parameters (each one desirably comprising a respectively determined parameter value) is determined for the target slurry or for a test slurry. Said determination may e.g. be based on the at least one identified target production parameter. The determination may be made by the model of step S13 or by another model or algorithm.

Accordingly, in the method of Fig. 2 a complete specification comprising all production parameters required for producing the target slurry (or a respective prototype test slurry) may be obtained.

Fig. 3 shows an exemplary embodiment of a method of producing a test slurry for evaluating the specification of the target slurry according to embodiments of the present disclosure.

In step S21 a (prototype) test slurry is produced. For this purpose, the at least one identified target production parameter and the further production parameters (and desirably the respective parameter values) may be used, e.g. those determined in steps S14 and S17 of Fig. 2. Accordingly, the method of Fig. 3 may form a continuation of the method of Fig. 2, e.g. step S21 may succeed step S17.

The production may be done automatically, semi-automatically or manually, e.g. in a laboratory or in a specialized slurry factory and/or cell factory.

In step S22 at least one slurry property of the test slurry is obtained, e.g. measured. Depending on the kind of slurry property, it may be obtained in any of the production stages of the test slurry or in operation.

In step S23 the obtained slurry property or properties of the test slurry are compared with the target requirements. Said comparison step may in particular comprise or be succeeded by any one of steps S24 and S25. The comparison of step S23 may be carried out by any suitable model or algorithm.

In step S24 the relevance score(s) of the one or more target production parameters and/or the non-target production parameters are adjusted as a function of the obtained test slurry properties.

Due to the possible adjustment of relevance scores, at least one non-target production parameter may be corrected to become a further target production parameter.

In step S25 a matching score of the test slurry is estimated, which indicates how far the test slurry matches with the target slurry. Said estimation may be based on a comparison of the at least one slurry property of the test slurry with target slurry properties.

In optional step S26 the model may be optimized (e.g. further finetuned) using the data of the test slurry, i.e. its production parameters (and parameter values) as input and its matching score and/or target production parameter (value) to supervise the optimization process.

It is also possible to use the data obtained in steps S24 and S25 to specify a second, updated prototype test slurry and/or the final target slurry. Accordingly, the method of Fig. 3 may be carried out iteratively, if required.

Fig. 4 shows an exemplary embodiment of a method of preparing a dataset and training/finetuning a model according to embodiments of the present disclosure.

In step S3 (also referred to as step S41) a dataset for training a model to specify a target slurry is provided or prepared. Said step S3 may contain at least one of steps S31 to S35.

In step S31 target requirements defining at least one target slurry property of the target slurry are provided.

In step S32 a subset of reference slurries which have been selected based on the target requirements are provided. The selection and labelling (provided in steps S34 and S35) may be made e.g. by human annotators. For example, said subset may be a subset of the reference dataset 12 of Fig. 1. The reference slurry of the subset may also be referred to as sample slurries. For example, the subset may comprise positive examples, i.e. sample slurries which are estimated to match well the target requirements, and negative examples, i.e. sample slurries which are estimated to not match well the target requirements (e.g. at least in view of one slurry property).

Accordingly, step S32 may comprise or be succeeded by at least one of steps S34 and S35.

In step S33, for each sample slurry a set of reference production parameters is provided. Said parameter types of the set may correspond to those of the set included in the reference slurry data of step S11. In other words, the set may comprise all information required to design and/or produce the slurry.

In step S34, for each sample slurry a matching score is determined as a function of a comparison between the target slurry and the sample slurry. In other words, the sample slurry may be labelled or annotated with the determined matching score.

In step S35, for each sample slurry at least one target production parameter is selected from the set of reference production parameters. The target production parameter may be chosen such that it is estimated to be relevant to achieve the target requirements. Correspondingly, also non-target production parameter(s) may be selected. Step S35 may also comprise determining or estimating a relevance score for at least one production parameter. In other words, the sample slurry may be labelled or annotated with a relevance score of at least one production parameter (i.e. of the target production parameter).

In step S42 (which follows a step S41 of providing a training dataset), a model is trained or fine-tuned on the dataset.

In the following an example is described, as how the method of the present disclosure may be applied to a real case: A customer defines as target requirements specific rheological properties of a slurry (e.g. viscosity = 34.9 Pas at a shear rate = 0.011/s, viscosity = 2.9 Pas at a shear rate = 1 1/s) and a target electrical conductivity of at least 7 mS/cm (the values are arbitrarily chosen) (also cf. operation S31). Based on these target requirements a subset of suitable references is selected from the existing data of already manufactured slurries (cf. operation S32). These slurries may be used as positive samples. In addition, further slurries may be selected having "unsuitable" characteristics. These slurries may be used as negative samples. Based on the obtained subset of positive (and optionally negative) samples the model is trained (cf. S42).

Then, the trained model may be fed with required data of all slurries of the dataset (cf. operation S13). The most important target production parameter(s) (e.g., slurry composition parameters such as proportion of additives, solvents, active material.... ) may be used to specify a test slurry. In this context, further production parameters can be determined and/or optimized based on the determined values of the target production parameters. For example, said further production parameters may be specified to reduce the costs of the slurry and/or increase a cell performance using the slurry.

With the properties determined in this way, a test slurry may then be produced (cf. operation S21) and it may be checked, whether the test slurry meets the target requirements (cf. operations S22, S23). If not, the model may be finetuned based on the results of the test slurry (cf. operations S24 to S26) and the methods of fig. 2 and 3 may be repeated.

Throughout the description, including the claims, the term "comprising a" should be understood as being synonymous with "comprising at least one" unless otherwise stated. In addition, any range set forth in the description, including the claims should be understood as including its end value(s) unless otherwise stated. Specific values for described elements should be understood to be within accepted manufacturing or industry tolerances known to one of skill in the art, and any use of the terms "substantially" and/or "approximately" and/or "generally" should be understood to mean falling within such accepted tolerances.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A computer-implemented method of specifying a target slurry for a target battery cell, comprising:
providing, for at least one reference slurry, a set of reference production parameters,
providing predefined target requirements defining at least one target slurry property of the target slurry,
inputting the set of reference production parameters and the target requirements into a model, wherein in response the model:
estimates a matching score of the reference slurry with respect to the target slurry, and/or
identifies at least one target production parameter from the set of reference production parameters which is estimated to be relevant to achieve the target requirements.

2. The method according to claim 1, wherein
in response the model further determines a value of the at least one target production parameter.

3. The method according to claim 1 or 2, wherein
identifying at least one target production parameter comprises:
identifying in addition at least one non-target production parameter from the set of reference production parameters which is estimated to be not relevant to achieve the target requirements, and/or
identifying at least one target production parameter comprises:
estimating a relevance score for the target production parameter or for each reference production parameter, and
identifying the at least one target production parameter as a function of the relevance score or relevance scores.

4. The method according to the preceding claim, wherein
the at least one reference slurry comprises a plurality of reference slurries, wherein
the model selects at least one reference slurry as a function of its matching score.

5. The method according to the preceding claim, wherein
the at least one target production parameter is identified from the at least one selected reference slurry.

6. The method according to any of the preceding claims, further comprising: determining a set of further production parameters for the target slurry or a test slurry as a function of the at least one identified target production parameter.

7. The method according to the preceding claim, further comprising:
producing a test slurry using the at least one identified target production parameter and the further production parameters,
obtaining at least one slurry property of the test slurry,
comparing the obtained slurry property of the test slurry with the target requirements, and at least one of the following steps:
estimating a matching score of the test slurry with respect to the target slurry as a function of the comparison,
adjusting the relevance score of the at least one target production parameter and/or the non-target production parameter as a function of the comparison,
correct at least one non-target production parameter to be a further target production parameter.

8. The method according to any of the preceding claims, wherein
the reference and/or target production parameters comprise at least one of:
• slurry preparation parameters, such as at least one of:
∘ slurry composition parameters defining properties of the materials used to produce the slurry,
∘ throughput parameters of liquid dosing and solid dosing of the slurry,
∘ configuration parameters of a mixing device configured to mix and/or knead the materials of the slurry, and
• slurry coating parameters, such as at least one of:
∘ configuration parameters of a pump configured to supply the slurry,
∘ configuration parameters of a coating system,
∘ a speed and/or tension of a substrate on which is coated with the slurry,
∘ configuration parameters of a drying system.

9. The method according to any of the preceding claims, wherein the reference and/or target slurry properties comprise at least one of:
• properties of the prepared slurry, such as at least one of:
∘ rheological properties of the prepared slurry
∘ a particle size distribution of the prepared slurry, and
• properties of the coated slurry, such as at least one of:
∘ a basis weight of the coated slurry,
∘ geometric or dimensional properties of the coated slurry,
∘ a surface temperature of the coated slurry,
∘ a defect pattern of the coated slurry,
∘ an adhesion force of the coated slurry,
∘ an electrode resistance of an electrode comprising the coated slurry,
∘ an electrochemical property of the coated slurry,
∘ an ionic and/or electrical conductivity.

10. The method according to any of the preceding claims, wherein
the model comprises at least one machine-learning model, optionally a pre-trained and/or fine-tuned machine-learning model.

11. A computer-implemented method of providing a dataset for training a model to specify a target slurry, comprising:
providing predefined target requirements defining at least one target slurry property of the target slurry,
providing a subset of reference slurries which have been selected based on the target requirements,
providing for each reference slurry of the subset:
a set of reference production parameters, and at least one of:
a matching score determined as a function of a comparison between the target slurry and the reference slurry, and
at least one target production parameter selected from the set of reference production parameters which is estimated to be relevant to achieve the target requirements.

12. The method according to the preceding claim, further comprising:
providing for each reference slurry of the subset at least one reference slurry property, wherein
the matching score is determined as a function of a comparison between the target slurry properties of the target slurry and the at least one reference slurry property of the reference slurry.

13. A computer-implemented method of training a model to specify a target slurry, comprising:
providing a dataset according to the method of the preceding claim 11 or 12,
training or finetuning the model by means of a supervised training process, wherein, for each reference slurry of the subset, the set of reference production parameters is used as input and the matching score and/or target production parameter are used to supervise the training process.

14. A computer program comprising computer-readable instructions which when executed by a data processing system cause the data processing system to carry out the method according to any one of preceding method claims.

15. A system for specifying a target slurry for a target battery cell, wherein
the system comprises a processing unit configured to process a model and to:
receive, for at least one reference slurry, a set of reference production parameters and at least one reference slurry property,
receive predefined target requirements defining at least one target slurry property of the target slurry,
input the set of reference production parameters and the target requirements into a model, wherein in response the model:
estimates a matching score of the reference slurry with respect to the target slurry, and/or
identifies at least one target production parameter from the set of reference production parameters which is estimated to be relevant to achieve the target requirements.
